# EUROPEAN PATENT APPLICATION

(11) **EP 4 485 101 A1**
(43) Date of publication of application: **01.01.2025**
(21) Application number: 24179611.9
(22) Date of filing: 03.06.2024
(51) Int. Cl.: G05B 19/042

(54) **CONFIGURING AN EVENT SYSTEM USING GENERATED DEVICE LABELS**

(30) Priority: 27.06.2023 US 202318214711
(71) Applicant: Honeywell International Inc., Charlotte, NC 28202 (US)
(72) Inventor: KULKARNI, Sagar Ramesh, Charlotte, 28202 (US); DUGE, Sudeep Jayakumar, Charlotte, 28202 (US); SELVAN, Nehru R., Charlotte, 28202 (US); KADDI, Vikranth Ashok, Charlotte, 28202 (US); SRIVASTAVA, Anushka, Charlotte, 28202 (US); RAVINDRAN, Vanathi, Charlotte, 28202 (US); ZAMSHED KHAN, Md Yusuf, Charlotte, 28202 (US); G D, Santhosh, Charlotte, 28202 (US); K P, Sunil Kumar, Charlotte, 28202 (US)
(74) Representative: Haseltine Lake Kempner LLP

(57) **Abstract**

Devices, systems, and methods for configuring an event system using generated device labels are described herein. In some examples, one or more embodiments include receiving existing configuration data, wherein the existing configuration data is descriptive of configurations of existing event systems, receiving facility data, wherein the facility data is descriptive of a particular facility, determining a configuration of an event system in the particular facility based on the existing configuration data and the facility data, and installing the event system in the facility according to the determined configuration.

## Description

### Technical Field

The present disclosure relates to devices, systems, and methods for configuring an event system using generated device labels.

### Background

Facilities, such as commercial facilities, office buildings, hospitals, campuses (e.g., including buildings and outdoor spaces), and the like, may have an alarm system that can be triggered during an event, such as an emergency situation (e.g., a fire, a security event, etc.). Such an alarm system may include an event system having a control panel (e.g., a fire control panel, an alarm system control panel, etc.) and a number of system devices (e.g., sensors, sounders, pull stations, etc.) located throughout the facility (e.g., on different floors and/or in different rooms of the facility) that can perform an action when a hazard event is occurring in the facility and provide a notification of the hazard event to the occupants of the facility via alarms or other mechanisms.

### Brief Description of the Drawings

Figure 1 is an example of a system for validating an event response in an event system, in accordance with one or more embodiments of the present disclosure.
Figure 2 is a flow chart associated with configuring an event system using generated device labels, in accordance with one or more embodiments of the present disclosure.
Figure 3 is an example of a computing device for configuring an event system using generated device labels in accordance with one or more embodiments of the present disclosure.

### Detailed Description

Devices, systems, and methods for configuring an event system using generated device labels are described herein. In some examples, one or more embodiments include receiving existing configuration data, wherein the existing configuration data is descriptive of configurations of existing event systems, receiving facility data, wherein the facility data is descriptive of a particular facility, determining a configuration of an event system in the particular facility based on the existing configuration data and the facility data, and installing the event system in the facility according to the determined configuration

A facility can utilize an event system in order to warn occupants of the facility of an emergency event, such as a fire, security event, etc. As used herein, the term "event system" refers to a system of devices to provide an audible and/or visible warning in an emergency event. For example, the event system can utilize event devices to warn occupants of the emergency event occurring in the space, such as a fire, security event, etc. As used herein, the term "event device" refers to a device that can receive an input relating to an event and/or generate an output relating to an event. Such event devices can be a part of the event system of a space in a facility/in the facility at large and can include devices such as fire sensors, smoke detectors, heat detectors, carbon monoxide (CO) detectors, or combinations of these; motion detectors; entry sensors (e.g., door sensors, window sensors, glass break sensors, shock/vibration sensors, etc.); interfaces; manual call points (MCPs); pull stations; input/output modules; aspirating units; and/or audio/visual devices (e.g., speakers, sounders, flashers, buzzers, microphones, cameras, video displays, video screens, etc.), and/or relay output modules, among other types of event devices.

Configuring an event system includes determining how the system, with its various component devices, is to be installed. For example, among other things, configuring an event system includes determining what type(s) of event devices are to be installed, how many of those devices are to be installed, and where in the facility they are to be installed. In previous approaches, these types of determinations are made by an expert in the field of event systems. Such an expert may look at a map of the facility and, using their expertise and knowledge, consider questions such as those previously discussed: which devices, how many, and where. Such a determination may be made based on the type, size, and/or purpose of the facility, in addition to national, regional, and/or local rules (e.g., codes, laws, statutes, etc.) governing event systems. Such rules are typically enforced for safety reasons and can include required redundancies, device quantities, device types, protocols, etc. In order to become an expert in the field of event systems, a person typically needs a great deal of experience and/or education. In some cases, formal licensure from a governing body may be a requisite. As a result, experts may be rare and/or expensive, and previous approaches may involve them visiting a facility numerous times to configure and/or install an event system.

Embodiments of the present disclosure can automate event system configuration in a facility using configuration data from existing event systems and data about the facility. Embodiments herein can allow unskilled and/or inexperienced installers to configure and commission an event system with minimal support from experts. As a result, cost savings can be realized and time can be saved. In addition, embodiments herein can consider the labeling conventions of other systems that already exist inside the facility, such as a heating, ventilation, and air conditioning (HVAC) systems and/or a building management system (BMS), for instance. In accordance with embodiments herein, the conventions that these systems use to label devices can be determined and extended to event system devices. Because these systems typically use labeling that is easy to understand, standardized, and corresponds to particular areas of the facility, embodiments herein can seamlessly be integrated.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

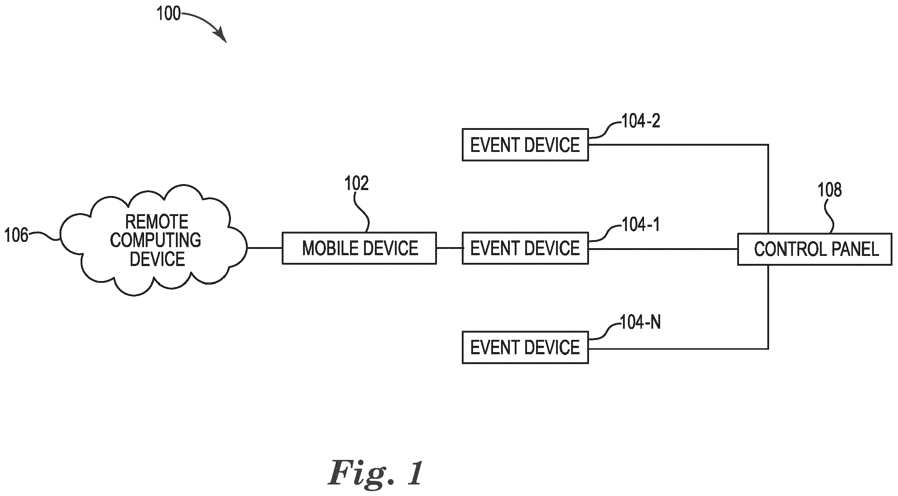

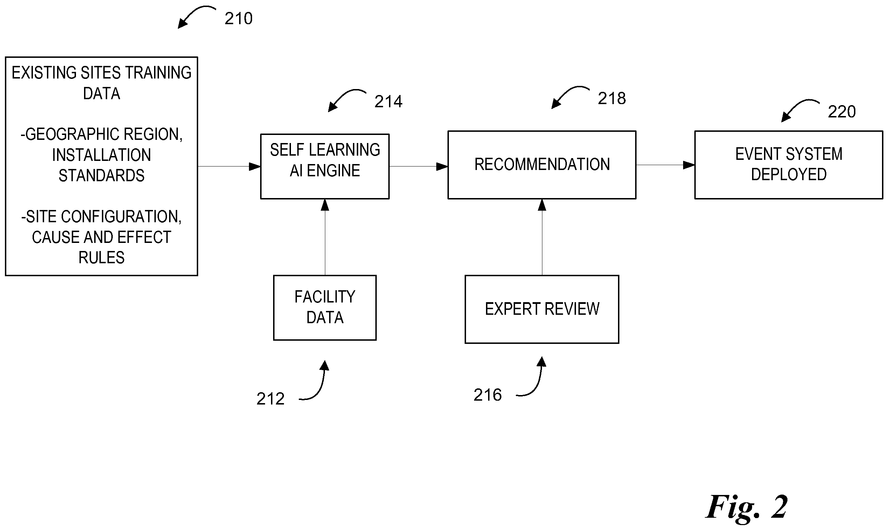

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 202 in Figure 2.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a system 100 for validating an event response in an event system, in accordance with one or more embodiments of the present disclosure. The system 100 can include a mobile device 102, event devices 104-1, 104-2, 104-N, remote computing device 106, and a control panel 108.

As mentioned above, the system 100 can be included in a facility, a space in a facility, etc. The system 100 can include an event system. The event system can include a device/series of devices in order to detect events and/or process and/or analyze the detected events to determine whether to generate an alarm for occupants of the facility.

Such devices to detect events can include event devices 104-1, 104-2, 104-N. For example, the event devices 104-1, 104-2, 104-N can be devices to detect events and/or process and/or analyze the detected events. As mentioned above, the event devices 104-1, 104-2, 104-N can include, for example, fire sensors, smoke detectors, heat detectors, carbon monoxide (CO) detectors, or combinations of these; motion detectors; entry sensors (e.g., door sensors, window sensors, glass break sensors, shock/vibration sensors, etc.); interfaces; manual call points (MCPs); pull stations; input/output modules; aspirating units; and/or audio/visual devices (e.g., speakers, sounders, flashers, buzzers, microphones, cameras, video displays, video screens, etc.), and/or relay output modules, among other types of event devices.

The system 100 can include a control panel 108. The control panel 108 can be utilized to control the various event devices 104 included in the system 100.

The system 100 can further include a mobile device 102. As used herein, a mobile device can include devices that are (or can be) carried and/or worn by the user. The mobile device 102 can be a phone (e.g., a smart phone), a tablet, a personal digital assistant (PDA), a laptop, smart glasses, and/or a wrist-worn device (e.g., a smart watch), among other types of mobile devices. Although not illustrated in Figure 1 for clarity and so as not to obscure embodiments of the present disclosure, the mobile device 102 can include a user interface.

As illustrated in Figure 1, the mobile device 102 can be connected to the remote computing device 106. The mobile device 102 can be connected to the remote computing device 106 via a wired and/or wireless network relationship. Examples of such a network relationship can include a local area network (LAN), wide area network (WAN), personal area network (PAN), a distributed computing environment (e.g., a cloud computing environment), storage area network (SAN), Metropolitan area network (MAN), a cellular communications network, Long Term Evolution (LTE), visible light communication (VLC), Bluetooth, Worldwide Interoperability for Microwave Access (WiMAX), Near Field Communication (NFC), infrared (IR) communication, Public Switched Telephone Network (PSTN), radio waves, and/or the Internet, among other types of network relationships.

Portions of the system 100 can be installed in a facility. Facilities, as referred to herein, include commercial facilities, office buildings, malls, residential structures, hospitals, schools, campuses (e.g., including buildings and outdoor spaces), etc.

Figure 2 is a flow chart associated with configuring an event system using generated device labels, in accordance with one or more embodiments of the present disclosure. An artificial intelligence (AI) engine 214 receives training data at 210 and facility data at 212.

The training data 210 may be referred to as "existing configuration data" and includes data descriptive of configurations of existing event systems. Stated differently, training data 210 includes data about other facilities in which event systems are installed. Such data can include a type of the facility, the types of event devices included therein, and the locations of those devices. In addition, this data can include local, regional, and/or national standards and/or laws governing event systems. Such rules are known to those of skill in the art and include, for example, a English rule that a fault in one zone cannot affect any other zones (addressed by placing an isolator at each zone boundary). In another example (e.g., Germany), each zone should have at least one microprocessor and not more than 32 detectors. In addition, this data can include cause and effect (C&E) rules and/or matrices. Embodiments herein can examine a zone and its topography in conjunction with adjacent zones, including those above and below, to determine logic for an evacuation strategy. In an example of a high rise building, if a zone on floor x has a fire, zones on floors above zone x may be prioritized in an evacuation (after the evacuation of zone x).

Facility data 212 is descriptive of the particular facility in which the system is to be installed and/or configured. Facility data 212 can include floor plan(s), maps, building information model(s) (BIMs) and/or computer aided design (CAD) drawings the facility. Facility data 212 can include descriptions of the types of areas within a facility. For instance, a facility can include classrooms, some of which may be specially designated as laboratories, which may carry particular fire concerns. Other features that may be determined in the example of a school include staff rooms, libraries, halls, play areas, lobbies, etc.

At 218, embodiments herein can provide a recommendation that includes a fire zonal map and/or C&E rules for the facility. Stated differently, some embodiments can determine a configuration of an event system in the facility based on the existing configuration data and the facility data. The determined configuration can be a file, for instance, that includes a mapping of the facility with the locations, types, and/or settings of devices to be installed therein. The configuration can include a co-relation of the facility's floor plan with identified labels to determine an event zone mapping with zone numbers and suggested zone texts based on previous determinations. The determined configuration can include a suggested device type and/or location for each zone. For example, a heat detector or MLT (motion, light, temperature) may be preferred in a chemistry laboratory or kitchen, while a beam detector may be preferred in large halls. In some embodiments, the determined configuration can include sounder configurations depending on zone type. For example, a bedroom may be configured with a lower volume sounder than a lobby and/or living room.

The recommendation can be reviewed by an expert at 216. In some embodiments, the event system can be deployed (e.g., installed) at 220 with the determined configuration upon approval of the event system expert. In some embodiments, the determined configuration can be modified responsive to one or more inputs made by the expert and the modified configuration can be deployed at 220.

As previously discussed, embodiments of the present disclosure can consider the labeling conventions of other systems that already exist inside the facility, such as a heating, ventilation, and air conditioning (HVAC) systems and/or a building management system (BMS), for instance. In accordance with embodiments herein, the conventions that these systems use to label devices can be determined and extended to event system devices. Because these systems typically use labeling that is easy to understand, standardized, and corresponds to particular areas of the facility, embodiments herein can seamlessly be integrated.

During an event, information is conveyed to users (e.g., facility operators) regarding which portions of a facility are affected. Labels for devices can be instrumental in this regard. In some embodiments, labeling conventions are based on floor plan drawings. In some embodiments, labeling conventions are based on the number of loops and/or nodes in the system. Within a panel, both physical and logical labeling may be used. An example of a physical label is "P1 L1 N1." An example of a logical label is "East wing, 4^{th} floor." Labeling conventions may differ from company to company and may depend on the installation. Embodiments herein can leverage the labeling of external systems (e.g., HVAC, BMS, lighting) to label different devices of the event system.

In many cases, in a facility, an HVAC system is installed first, followed by BMS systems, which can include security systems and/or access control systems, then by an event system. The AI engine 214 can receive labeling information from existing systems in the facility as part of the facility data 212. The AI engine 214 can generate labels for the event system devices based on these labels. Accordingly, embodiments herein can reduce ambiguous strings and redundant strings. In some embodiments, spelling can be checked and corrected. Unintended different spellings for the same entity (e.g., "Smith Wing" vs. "Smythe Wing") can be made uniform. Redundant labels (e.g., "corridor sensor") can be avoided in lieu of more descriptive labels.

In an example, a security camera near a first floor conference hall has the label "FirstFloorconference_camera." Embodiments herein can determine that a smoke detector, heat sensor, and alarm flasher that are (or are to be) installed in the same conference hall should have a similar naming convention. Accordingly, these devices may respectively be named "FirstFloorconference_smdetector," FirstFloorconference_heatsensor," and "FirstFloorconference_AlarmFlasher." It is to be understood that the reverse is true: if an event system is installed before other facility systems, embodiments herein can determine the labeling convention of the event system and, based on that convention, determine labels for the devices of the other systems.

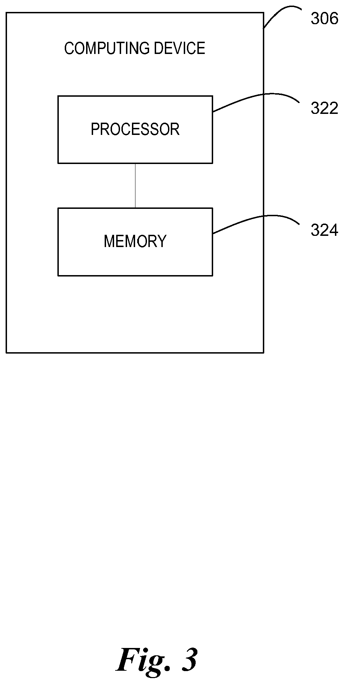

Figure 3 is an example of a computing device 306 for configuring an event system using generated device labels in accordance with one or more embodiments of the present disclosure. The computing device 306 can be analogous to the remote computing device 106, the mobile device 102, and/or the control panel 108, previously described in connection with Figure 1. As illustrated in Figure 3, the computing device 306 can include a memory 324 and a processor 322 for configuring an event system using generated device labels in accordance with one or more embodiments of the present disclosure.

The memory 324 can be any type of storage medium that can be accessed by the processor 322 to perform various examples of the present disclosure. For example, the memory 324 can be a non-transitory computer readable medium having computer readable instructions (e.g., executable instructions/computer program instructions) stored thereon that are executable by the processor 322 for validating an event response in an event system in accordance with the present disclosure.

The memory 324 can be volatile or nonvolatile memory. The memory 324 can also be removable (e.g., portable) memory, or non-removable (e.g., internal) memory. For example, the memory 324 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 324 is illustrated as being located within the computing device 306, embodiments of the present disclosure are not so limited. For example, memory 324 can also be located internal to another computing resource (e.g., enabling computer readable instructions to be downloaded over the Internet or another wired or wireless connection).

The processor 322 may be a central processing unit (CPU), a semiconductor-based microprocessor, and/or other hardware devices suitable for retrieval and execution of machine-readable instructions stored in the memory 324.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method for configuring an event system, comprising:
receiving existing configuration data (210), wherein the existing configuration data (210) is descriptive of configurations of existing event systems;
receiving facility data (212), wherein the facility data (212) is descriptive of a particular facility;
determining a configuration (218) of an event system in the particular facility based on the existing configuration data (210) and the facility data (212); and
installing (220) the event system in the facility according to the determined configuration.

2. The method of claim 1, wherein receiving the existing configuration data (210) includes receiving, for each of a plurality of event systems:
a type of facility in which the event system is installed;
types of event devices (104) included in the event system; and
locations of the event devices (104) included in the event system.

3. The method of claim 1, wherein receiving the facility data (212) includes receiving a map of the facility.

4. The method of claim 1, wherein determining the configuration of the event system includes determining:
types of event devices (104) to be installed in the event system;
quantities of event devices (104) to be installed in the event system;
locations of event devices (104) to be installed in the event system; and
cause and effect rules for the event system.

5. The method of claim 1, wherein the method includes installing the event system after receiving an approval of the determined configuration by an event system expert (216).

6. The method of claim 1, wherein the method includes:
modifying the determined configuration responsive to receiving an input made by an event system expert (216); and
installing the event system in the facility according to the modified determined configuration.

7. The method of claim 1, wherein receiving the facility data (212) includes:
receiving data from a heating, ventilation, and air conditioning (HVAC) system of the facility;
receiving data from a building management system (BMS) of the facility,
wherein the BMS includes a security system of the facility, and an access system of the facility.

8. The method of claim 7, wherein receiving the facility data (212) includes receiving device labels for a plurality of HVAC devices and a plurality of BMS devices already installed in the facility.

9. The method of claim 8, wherein the method includes determining a device labeling convention based on the device labels.

10. The method of claim 9, wherein determining the configuration of the event system includes determining device labels for each of a plurality of event devices (104) of the event system, wherein the determined device labels follow the determined device labeling convention.

11. A non-transitory machine-readable medium (324) having instructions stored thereon which, when executed by a processor (322), cause the processor to:
receive existing configuration data (210), wherein the existing configuration data (210) is descriptive of configurations of existing event systems;
receive facility data (212), wherein the facility data (212) is descriptive of a particular facility;
determine a configuration (218) of an event system in the particular facility based on the existing configuration data (210) and the facility data (212); and
display the determined configuration of the event system in a rendering of the facility.

12. The medium of claim 11, including instructions to determine the configuration of the event system in the particular facility based on rules governing event systems.

13. The medium of claim 12, wherein the rules are specific to a country in which the facility is located.

14. The medium of claim 12, wherein the rules are specific to a state, province, or territory in which the facility is located.

15. The medium of claim 11, wherein the instructions to receive the facility data include instructions to receive device labels for a plurality of HVAC devices and a plurality of BMS devices already installed in the facility.
